# EUROPÄISCHE PATENTSCHRIFT

(11) **EP 0 737 090 B1**
(45) Veröffentlichungstag und Bekanntmachung des Hinweises auf die Patenterteilung: **14.03.2001**
(21) Anmeldenummer: 95905026.1
(22) Anmeldetag: 30.12.1994
(51) Int. Cl.: B01D 29/01, B01D 29/07, B01D 46/52

(54) **VERFAHREN ZUR HERSTELLUNG EINES FLUIDFILTERS**
METHOD OF MANUFACTURING A FILTER FOR FLUIDS
PROCEDE DE FABRICATION D'UN FILTRE A FLUIDES

(30) Priorität: 30.12.1993 DE 4345129
(43) Veröffentlichungstag der Anmeldung: 16.10.1996
(73) Patentinhaber: JACOBI Systemtechnik GmbH, 01474 Weissig bei Dresden (DE)
(72) Erfinder: KÄHLER, Kai, D-20355 Hamburg (DE)
(74) Vertreter: Meissner, Bolte & Partner
(86) Internationale Anmeldenummer: DE9401556
(87) Internationale Veröffentlichungsnummer: WO9517942

(56) Entgegenhaltungen:
- EP-A- 0 377 419
- EP-A- 0 382 331
- GB-A- 2 150 461
- US-A- 3 692 184

## Beschreibung

Die Erfindung betrifft ein Verfahren zur Herstellung eines Fluidfilters nach dem Oberbegriff des Anspruchs 1 sowie eine Vorrichtung zur Durchführung des Verfahrens.

Fluidfilter der im Oberbegriff des Anspruchs 1 spezifizierten Art dienen dazu, Verunreinigungen aus einem hindurchströmenden Fluid (insbesondere Luft oder technischen Gasen, grundsätzlich aber auch Flüssigkeiten) abzuscheiden. In Luftfiltern werden gegenwärtig überwiegend Filterelemente verwendet, welche aus einem Mikro-Faservlies, insbesondere aus Glasfasern, bestehen.

Um die effektive Filterfläche gegenüber der Anströmfläche des ein Filterelement oder einen Filterbereich bildenden Luftfilters zu vergrößern, ist das Filtermedium zickzackförmig gefaltet, so daß eine Anzahl von über Faltenkanten aneinander anschließenden Falten entsteht, welche in einem spitzen Winkel zu den Wandungen der Faltung und dabei quer zur Richtung der Faltenkanten von dem zu reinigenden Medium durchströmt werden.

Durch die Materialablagerung - insbesondere auch die Ablagerung größerer Partikel - an der Anströmseite des Filters, Wirbelbildungen im anströmenden Fluid, geringfügige Unregelmäßigkeiten der Faltung usw. kommt es beim Durchströmen des Filters zu Inhomogenitäten der Fluidströmung, die die Faltenanordnung einer starken mechanischen Wechselbelastung aussetzen und zu einer Erhöhung des Strömungswiderstands führen. Überdies ist die Fluidströmung nach Verlassen des Filters stark verwirbelt, was den Strömungswiderstand in nachgeordneten Leitungen und die Belastung nachfolgender Bauteile vergrößert.

Um die Falten in definiertem Abstand voneinander zu halten und die Faltenanordnung des Filtereinsatzes mechanisch zu stabilisieren, werden die Falten daher beispielsweise - wie etwa in US 3,531,920 oder in einer speziellen Weiterbildung in DE 41 26 126 A1 beschrieben - derart mit aus der Ebene der Faltenwände hervorstehenden Vorsprüngen versehen, daß die Vorsprünge einander benachbarter Faltenwände aneinander anliegen und die Faltenwände gegeneinander abstützen.

Aus DE 40 38 966 ist es auch bekannt, separate Abstandshalter mit gleicher Funktion auf die Faltenwände aufzusetzen bzw. in diese einzufügen. Die Abstandshalter können - wie in der vorgenannten Druckschrift als eine Möglichkeit erwähnt oder auch in DE 30 37 019 A1 ausgeführt - Klebstoffaggregate, insbesondere in Fadenform, sein. Diese haben neben der abstandshaltenden zusätzlich eine die Faltenwände verbindende Wirkung und erhöhen somit die Steifigkeit des Filtereinsatzes zusätzlich.

Der Klebstoffauftrag erfolgt vor dem Falten des Filtermaterials auf die ebene Bahn, und die Verklebung der Faltenwände erfolgt durch den Kontakt der Klebstoffäden miteinander beim Zusammenfalten. Dieses Lösung ist daher nur für sehr dichte Faltenpackungen geeignet.

In DE 39 03 730 A1 ist beschrieben, daß ein die Faltenlagen miteinander verbindender und stabilisierender Klebstoffaden, der nach der Faltung auf den Kantenbereich aufgetragen werden kann, mit Prägungen in den Faltenwänden kombiniert ist. Diese Lösung ermöglicht etwas größere Faltenabstände. die jedoch aufgrund der begrenzten Prägetiefe üblicher Filtermaterialien noch immer sehr begrenzt sind.

In DE 42 06 407 ist beschrieben, daß der Faltenkantenbereich einer bereits gefalteten Filtermaterialbahn mit einem feinen Gespinst von Klebstoffäden überzogen wird, um die Falten miteinander zu verbinden und den Filtereinsatz zu stabiliseren. Auch diese Lösung ist für größere Faltenabstände nicht mehr praktikabel, da das feine Klebstoffgespinst keine hinreichend stabile Verbindung weiter auseinanderliegender Faltenkanten herstellen kann und die Gespinstfäden (insbesondere bei Auftrag von unten auf eine im Fertigungsprozeß obenliegende Faltenbahn) "durchhängen" und keine definierte Lage zu den Faltenkanten mehr einnehmen.

Aus EP 0 377 419 A1 oder EP 0 377 420 A1 iat eine Anordnung bekannt, bei der miteinander (durch jeweils dort lokalisierte Klebstoffaggregate) im Scheitel- sowie im Sohlenbereich verklebte Faltenwände unter Nutzung der Klebstoffaufträge im Scheitelbereich dort zusätzlich mit einer ebenen Lage eines feinmaschigen Materials versehen werden, das zur Vergleichmäßigung des Strömungsverlaufes dient und den Filtereinsatz weiter versteift. In der Druckschrift ist auch auf die Möglichkeit des Aufbringens einer solchen zusätzlichen Materiallage auf beide Faltenkantenbereiche des Filtereinsatzes hingewiesen. Auch hier erfolgt die gegenseitige Fixierung der Faltenwände über das In-Kontakt-Kommen der Klebstoffaggregate benachbarter Faltenwände beim Falten, so daß auch diese Lösung nur für dichte Faltenpackungen geeignet ist.

Der Erfindung liegt daher die Aufgabe zugrunde, ein Verfahren zur Herstellung eines gattungsgemäßen Filtereinsatzes, das zur effizienten Herstellung von mechanisch stabilen Filtereinsätzen mit größerem Faltenabstand geeignet ist, sowie eine Vorrichtung zur Durchführung dieses Verfahrens anzugeben.

Diese Aufgabe wird durch ein Verfahren mit den Merkmalen des Anspruchs 1 bzw. eine Vorrichtung mit den Merkmalen des Anspruchs 17 gelöst.

Die Erfindung schließt die Erkenntnis ein, daß eine Verklebung und damit Stabilisierung von Faltenlagen größeren Abstandes mit Hilfe von auf den oder die Kantenbereich(e) der Faltenlagen aufgetragenen Klebstoffäden technologisch beherrschbar ist, wenn die Klebstoffäden zunächst auf einen sie in ihrem plastischen Zustand fixierenden flächigen Träger aufgebracht, auf diesem Träger in die Faltenkanten schneidender Orientierung mit diesen in Kontakt gebracht und ausgehärtet bzw, vernetzt werden und danach der Träger abgezogen wird oder überhaupt auf dem Filtereinsatz verbleiben kann.

Die Klebstoffäden schließen, wenn einzelne Fäden verwendet werden, mit den Faltenkanten einen konstanten oder ggfs. auch - etwa bei mäander- oder wellenförmigem Verlauf, sich über die Länge der Materialbahn ändernden Winkel ein.

Es ist aber auch möglich, auf den Träger ein Gespinst von miteinander vernetzten Fäden aufzutragen, wobei stets ein Teil der Fäden des Gespinstes die Faltenkanten schneidet.

Eine Ausgestaltung, bei der die Lage des (im wesentlichen ebenen) Trägermaterials für das Fluid durchlässig ist und nach der Aushärtung des Klebstoffs auf dem Faltenkantenabschnitt belassen wird, weist besondere Vorteile auf.

So kann eine auf dem anströmseitigen Faltenkantenabschnitt belassene Materiallage als zweiter Filterbereich, insbesondere als Vorfilter im anströmenden Fluid, wirken und das Eindringen gröberer Partikel in den eigentlichen Filtereinsatz verhindern. Weiterhin kann eine auf dem abströmseitigen Faltenkantenabschnitt belassene Materiallage als Strömungsberuhiger im abströmenden Fluid wirken. Der Strömungsberuhiger kann besonders wirkungsvoll funktionieren, wenn der Klebstoffauftrag in einer solchen Dicke erfolgt, daß zwischen dem ersten Filterbereich und dem Strömungsberuhiger ein Abstand von 1/10 bis 1/20 der Ausdehnung des ersten Filterbereiches in Strömungsrichtung eingestellt wird.

Wenn der Träger auf dem Faltenpaket des ersten Filterbereiches verbleiben und im oben genannten Sinne als zweiter Filterbereich oder als Strömungsberuhiger wirken soll, kann als Material hierfür ein vliesartiges Material oder ein monofilares Gewebe verwendet werden. Dieses wird für ein herkömmliches Luftfilter Durchlässe bzw. eine Maschenweite im Größenbereich von 30 bis 100 pm aufweisen und kann etwa Fasern aus Glas, Keramik, zellulose, Kunststoff oder mineralischen Stoffen aufweisen.

Für eine als Strömungsberuhiger wirkende Materiallage oder eine solche, die primär zur weiteren mechanischen Stabilisierung oder als Griffschutz auf dem ersten Filterbereich belassen wird, wird vorzugsweise ein netz- oder gitterartiges Material, insbesondere aus Metall oder Kunststoff, verwendet.

Alternativ zur Verwendung eines fluidpermeablen Materials als Träger für die Klebstoffäden kann ein Material verwendet werden, das während oder nach der Aushärtung des Klebstoffs vor Gebrauch des Fluidfilters vom Faltenkantenabschnitt wieder abgezogen wird derart, daß die Klebefäden auf dem Faltenkantenabschnitt verbleiben. Als solches Material kann eine Folie aus einem Kunststoff verwendet werden, der vom Klebstoff in dessen plastischem, nicht ausgehärtetem Zustand benetzt wird, von diesem im an- oder ausgehärteten Zustand jedoch zerstörungsfrei abziehbar ist. Auch dieses Material kann ggf. als Griffschutz bis zur Fertigstellung des Filters oder sogar bis unmittelbar vor dessen Ingebrauchnahme auf dem Faltenpaket verbleiben.

Eine besonders präzise Positionierung der Klebstoffäden gegenüber den Faltenkanten sowie eine exakte Formgebung der Fäden in ihrer sich über die Faltenkanten erhebenden Kontur ist bei einer Ausgestaltung möglich, bei der der Träger vor dem Auftragen des Klebstoffs mit der vorgesehenen Lage und Form der Klebstoffäden des Klebstoffs entsprechenden Vertiefungen versehen wird.

Zusätzlich oder alternativ hierzu können auch die Faltenkanten des mit dem Klebstoff zu versehenden Faltenkantenabschnittes vor dem Aufbringen des mit den Klebefäden versehenen Trägers mit der vorgesehenen Lokalisierung des Klebstoffs entsprechenden Vertiefungen versehen werden.

Beide Ausgestaltungen ermöglichen in vorteilhafter Weise einen Klebstoffauftrag in exakt bestimmbarer Menge und mit definierter, über die Fadenlänge konstanter und für mehrere Fäden gleicher Geometrie.

Diesen Ausgestaltungen des Verfahrens entsprechend, umfaßt die im unabhängigen Vorrichtungsanspruch spezifizierte Vorrichtung zu dessen Durchführung zusätzlich Prägewerkzeuge zum Prägen von Vertiefungen und/oder Erhebungen in das Material für den ersten Filterbereich und/oder Werkzeuge zum Prägen von Vertiefungen zur Aufnahme des danach lokalisiert aufgetragenen Klebstoffs in das Trägermaterial für die Klebstoffäden.

Wird ein Träger verwendet, der vor Ingebrauchnahme vom Filtereinsatz wieder abgezogen werden muß, sind Mittel zum Abziehen des Trägers von dem ersten Filterbereich während des oder nach dem Aushärten(s) des Klebstoffs vorzusehen.

Das beschriebene Verfahren kann für nur einen Faltenkantenbereich des Filtereinsatzes zur Anwendung kommen; es können aber hiermit in vorteilhafter Weise auch beide Faltenkantenbereiche mit je einem Träger mit aufgebrachten Klebstoffäden bzw. -gespinsten in Kontakt gebracht werden. Von Vorteil kann auch eine Kombination mit dem herkömmlichen verfahren sein derart, daß beim gleichzeitigen Klebstoffauftrag von oben und unten beim Aufbringen von unten mit Träger gearbeitet wird, um das Herabtropfen des Klebers zu vermieden, während das Aufbringen von oben auf herkömmliche Weise erfolgt.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1a und 1b Prinzipdarstellungen der wesentlichsten Schritte zweier Ausführungsformen des erfindungsgemäßen Verfahrens,
Figur 2 ein Ablaufschema der wesentlichsten Verfahrensschritte einer weiteren Ausführungsform des erfindungsgemäßen Verfahrens und
Figur 3 eine schematische Querschnittsdarstellung eines nach einer Ausführungsform des erfindungsgemäßen Verfahrens hergestellten Filters.

Figur la zeigt schematisch, wie eine Bahn Filterpapier 1, die bereits quer zur Längserstreckung der Bahn verlaufende Prägungen 2 zur Bildung von Faltenkanten aufweist, zu einem Faltenpaket 3 mit einem oberen Faltenkantenbereich 2a' und einem unteren Faltenkantenbereich 2b' gefaltet und dabei in die durch den schraffierten Pfeil bezeichnete Richtung vorgeschoben wird.

Gleichzeitig mit der Filterpapierbahn 1 wird eine Kunststoffgitterbahn 4 über zwei rotierende Walzen 5a und 5b in die gleiche Richtung vorgeschoben und bis auf einen geringen Abstand an den unteren Faltenkantenbereich 2b' der Filterpapierbahn 1 herangeführt. Vor dem Heranführen wird im Bereich der ersten Walze 5a aus vier Klebstoffauftragsmodulen 6a bis 6d jeweils eine pro Zeiteinheit konstante Menge eines pastosen Klebstoffs auf die Kunststoffgitterbahn 4 aufgetragen.

Durch die Vorschubbewegung bilden sich dabei auf dieser vier Klebstoffäden 7a bis 7d. Diese kommen in dem Bereich, in dem die Kunststoffgitterbahn 1 über die zweite Walze 5b läuft, in Kontakt mit den Falten des unteren Faltenkantenbereiches 2b'. Der Klebstoff dringt dabei teilweise in das Filterpapier ein und verbindet dieses mit der Gitterbahn. Im Bereich jenseits der Walze 5b härtet der Klebstoff aus (was in der Figur durch die zunehmende Schwärzung des Klebstoffadens 7d verdeutlicht wird), und damit sind die Faltenkanten des unteren Faltenkantenbereiches 2b' über den ausgehärteten Klebstoff stabil miteinander und der Gitterbahn 4 verbunden.

Die Kunststoffgitterbahn verbleibt anschließend als Träger und gleichzeitig Vorfilter auf dem Faltenpaket 3 und bildet mit diesem zusammen einen Filtereinsatz 8.

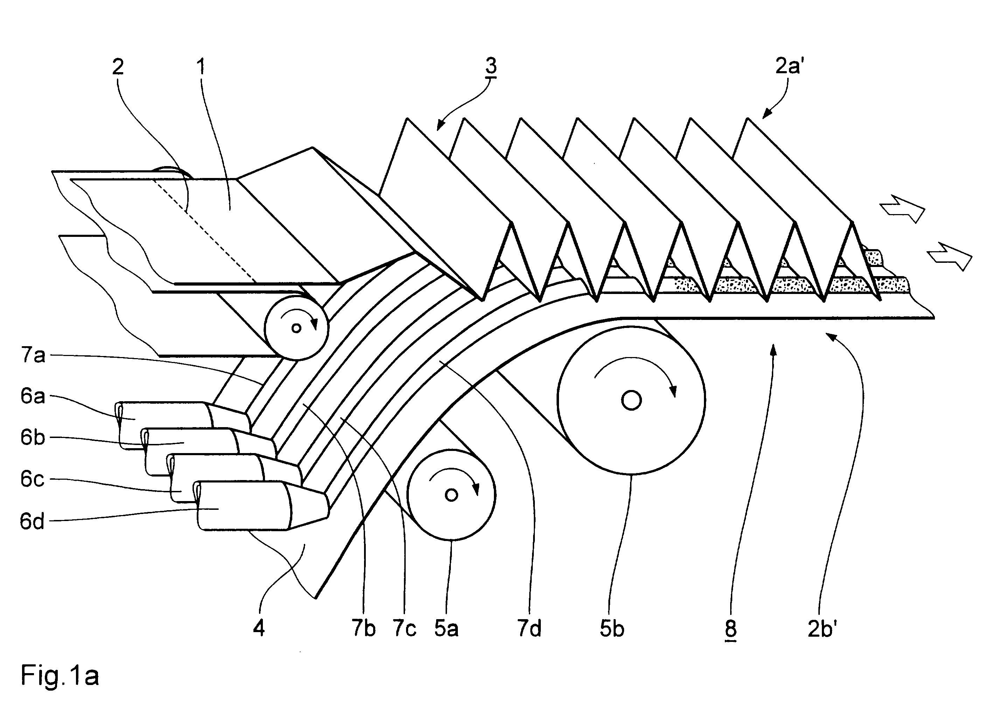

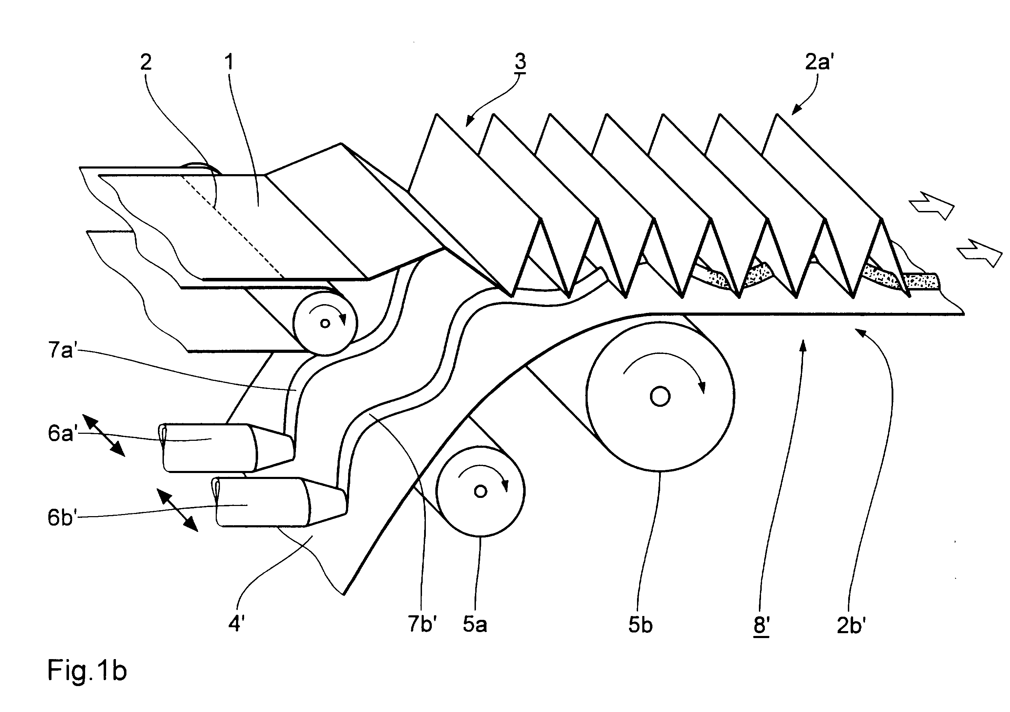

Fig. 1b zeigt eine gegenüber Fig. la modifizierte Ausführungsform, wobei übereinstimmende Teile mit den gleichen Bezugsziffern bezeichnet sind und nicht nochmals erläutert werden. Im Unterschied zu Fig. la sind hier zwei in ihrer lateralen Stellung relativ zur Filtermaterialbahn steuerbare Klebstoff-Auftragsdüsen 6a' und 6b' vorgesehen, die auf eine undurchlässige Trägerfolie 4' jeweils eine Klebstoffbahn 7a' bzw- 7b' mit in Längsrichtung der Bahn wellenförmigem Verlauf aufbringen. Der nach deren Aushärten gebildete Filtereinsatz 8' kann mit der Folie 4' auf dem Faltenkantenbereich ausgeliefert werden, die Folie wird aber vor der Ingebrauchnahme des Filters abgezogen.

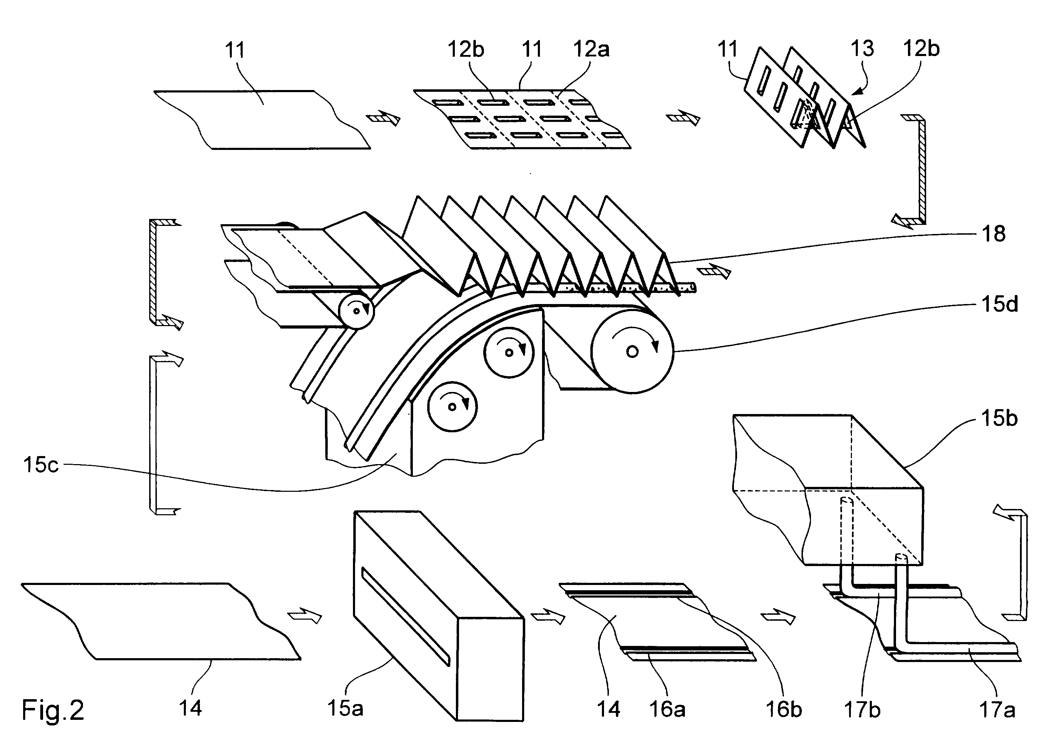

Fig. 2 verdeutlicht schematisch den Verfahrensablauf für eine andere Ausführungsform.

Hierbei wird ein mit sickenartigen, mit ihrer größeren Erstreckung in Längsrichtung der Bahn liegenden, Vertiefungen 12b sowie mit vorgeprägten Faltkanten 12a versehenes Glasfaservlies 11 zu einem Faltenpaket 13 gefaltet, wobei die sickenertigen Vertiefungen 12b einander benachbarter Faltenwände aneinander zu liegen kommen und die Faltenwände gegeneinander abstützen.

Eine Kunststoffolie 14 wird in einer Rilliermaschine 15a mit längs der Bahn verlaufenden Rillen 16a und 16b mit halbkreisförmigem Querschnitt versehen. In diese Rillen wird über eine Auftragsvorrichtung 15b ein halbflüssiger Thermoplastkunststoff so dosiert, daß sich jeweils eine etwas aus der Rille hervorstehende Wulst 17a bzw. 17b bildet.

Die Kunststoffolie mit den Klebstoffwülsten wird dann einer Andruck- und Kühlvorrichtung 15c mit entsprechend der Lage und dem Querschnitt der Rillen 17a und 17b profilierten Andruckrädern zugeführt, in der sie an den unteren Faltenkantenabschnitt des Faltenpakets 13 angedrückt und gleichzeitig gekühlt wird. Die Kunststoffäden erstarren dabei, und die beim Andrücken der Folie bis zu deren Oberfläche in die zunächst noch plastischen Kunststoffäden eingreifenden Faltenkanten sind nunmehr durch die erstarrten Fäden miteinander zu einem stabilisierten Filtereinsatz 18 verbunden.

Anschließend wird die Kunststoffolie von dem weiter vorgeschobenen Filtereinsatz 18 in einer Anziehvorrichtung 15d abgezogen und aufgewickelt, womit das Filterelement einsetzbar ist.

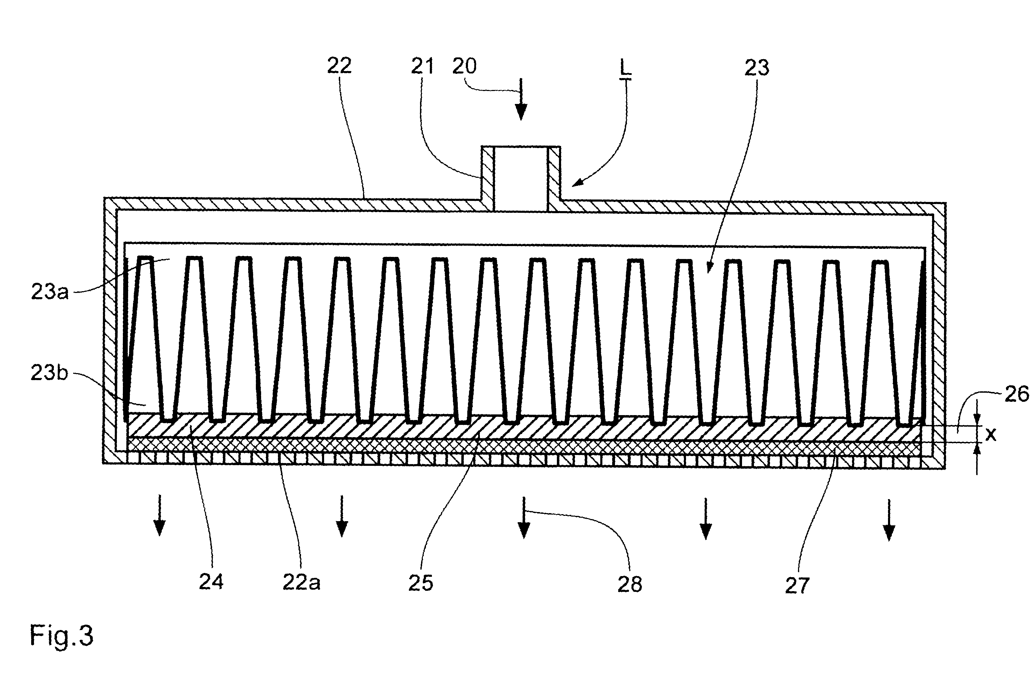

Figur 3 zeigt eine vereinfachte Querschnittsdarstellung eines Luftfilters mit integriertem Strömungsberuhiger, das unter Anwendung einer Ausführungsart des erfindungsgemäßen Verfahrens hergestellt ist.

Das in Figur 3 gezeigte Luftfilter L ist im wesentlichen quaderförmig ausgebildet. Der Zustrom der zu reinigenden Luft 20 erfolgt durch einen Ansaugstutzen 21 von der Filteroberseite her. Ein in einem Filtergehäuse 22 angeordneter Filtereinsatz 23 umfaßt ein eine Vielzahl von zickzackförmigen Faltungen aufweisendes, aus Glasfaservlies bestehendes Filterelement, dessen abströmseitiger Kantenbereich 24 über quer zu den Faltenkanten verlaufende angeschäumte Polyurethanwülste 25 (von denen in der Figur einer im Querschnitt gezeigt ist) über einen durch diese relativ dicken Wülste gebildeten Zwischenraum 26 mit der Höhe x mit einem Strömungsberuhiger 27 aus einem Kunststoffaservlies mit einer "Maschenweite" im Bereich von 30 bis 100 µm verbunden ist. Dieser liegt auf der Innenseite der unteren, aus Streckmetall bestehenden, Gehäusefläche 22a des Filtergehäuses 22 auf. Der Abstand x entspricht etwa 1/10 bis 1/20 der Ausdehnung des Filtereinsatzes in Strömungsrichtung der zu reinigenden Luft 20.

Die anströmende Luft gelangt durch den Stutzen 21 auf die Anströmseite 23a des Filtereinsatzes 23 und tritt unter Abscheidung der Schwebstoffe durch das Filtervlies hindurch zur Abströmseite 23b, wobei die Geometrie des Filters und unterschiedliche Ablagerungen in den einzelnen Falten zu Inhomogenitäten der Strömung führen, die mit der Einwirkung von Zug- und Druckkräften auf Filtereinsatz verbunden sind. Die Faltenlage wird diesen Kräften gegenüber durch die punktuelle Verschäumung der Faltenkanten mit den PU-Wülsten 25 und über diese mit dem Kunststoffaservlies 26 stabilisiert. Im Zwischenraum 26 erfolgt eine Angleichung der unterschiedlichen Geschwindigkeitskomponenten der abströmenden Luft 28, womit zugleich eine Beruhigung auf der Antrömseite und damit eine Verringerung der mechanischen Belastung des Filtereinsatzes erreicht wird.

Die nach Passieren des Strömungsberuhigers aus dem Luftfilter abströmende Luft weist in vorteilhafter Weise eine quasi-laminare Strömung auf, die zu einer erheblichen Verminderung des Strömungswiderstands des Luftfilters und einer Verringerung der Geräuschentwicklung beim Betrieb des Filters führt.

Je nach konkretem Anwendungszweck kann für den Strömungsberuhiger 27 auch eine Struktur verwendet werden, welche gitter- oder lamellenartig ausgebildet ist und deren Öffnungen in Strömungsrichtung orientiert sind. Geeignet sind auch porige Strukturen, etwa Membranen, die in Strömungsrichtung Durchlässe aufweisen.

Die den Strömungsberuhiger abstützende Streckmetallplatte kann auf einfache Weise in zwei an den Seitenwänden des Filtergehäuses vorgesehene Profilleisten quer zur Strömungsrichtung der zu reinigenden Luft in das Filtergehäuse eingeschoben und in dieser Lage verriegelt werden. Damit ist der Filtereinsatz mit angeschäumtem oder -geklebtem Strömungsberuhiger leicht herausnehm- und austauschbar.

Auf zum Aufbau gemäß Figur 3 weitgehend analoge Weise kann ein Luftfilter mit integriertem Vorfilter aufgebaut sein, wobei dieses selbstverständlich auf der Anströmseite des faltenförmigen Filtereinsatzes an diesen angeformt ist.

Unter Klebstoff im Sinne der Erfindung sind alle Stoffe zu verstehen, die eine stoffschlüssige Verbindung zwischen dem Träger und dem faltenförmigen Filterbereich ermöglichen und während oder nach deren Verbinden aushärten bzw. erstarren. Dies können - auf das jeweilige Filter- und Trägermaterial abgestimmt - Ein- oder Zweikomponentenkleber, lufthärtende Thermoplaste oder Schaumkunststoffe etc. sein. Die Verbindung von Filtermaterial und Kunststoffäden kann auch durch (punktuelles) Verschweißen der Faltenkanten mit dem Kunststoffaden erfolgen.

Die Faltung des eigentlichen Filterelements muß nicht streng zickzackförmig sein; insbesondere kann sie etwa auch trapezförmige Faltenquerschnitte aufweisen, womit sich in vorteilhafter Weise die Kontaktfläche zwischen den Faltenwänden und den Klebefäden vergrößert.

Auch im übrigen beschränkt sich die Erfindung in ihrer Ausführung nicht auf die vorstehend angegebenen Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Herstellung eines Fluidfilters (8; 8'; 18; L), mit einem ersten Filterbereich (3; 13; 23), der aus einer Anzahl von in im wesentlichen zickzack-förmiger, kontinuierlicher Faltung angeordneten Faltenwänden aus für das Fluid durchlässigem Material (1; 11) besteht, die in mindestens einem Faltenkantenabschnitt (2b'; 24) durch lokalisierten Klebstoffauftrag miteinander verbunden sind,
**dadurch gekennzeichnet,** daß
der Klebstoffauftrag auf den Faltenkantenabschnitt (2b'; 24) dadurch erfolgt, daß eine Lage eines im wesentlichen ebenen Trägermaterials (4; 4'; 14; 27) auf einer Oberfläche mit einem streifen- bzw. fadenförmigen Klebstoffauftrag (7a bis 7d; 7a', 7b'; 17a, 17b; 25) versehen wird, anschließend die Klebstoffstreifen bzw. -fäden in die Faltenkanten schneidender Orientierung in Kontakt mit dem Faltenkantenabschnitt (2b'; 24) des vorgefalteten ersten Filterbereiches (3; 13; 23) gebracht und mit den Faltenkanten verbunden werden.

2. Verfahren nach Anspruch 1, **dadurch gekennzeichnet,** daß das Trägermaterial (4; 27) für das zu filternde Fluid (20) durchlässig ist und nach der Aushärtung des Klebstoffs auf dem Faltenkantenabschnitt (2b', 24) belassen wird.

3. Verfahren nach Anspruch 2, **dadurch gekennzeichnet,** daß der auf dem Faltenkantenabschnitt (2b') belassene Träger (4) als zweiter Filterbereich, insbesondere als Vorfilter im anströmenden Fluid, auf dem ersten Filterbereich (3) belassen wird.

4. Verfahren nach Anspruch 2, **dadurch gekennzeichnet,** daß der auf dem Faltenkantenabschnitt (24) belassene Träger als Strömungsberuhiger (27) im abströmenden Fluid (28) auf dem ersten Filterbereich (23) belassen wird.

5. Verfahren nach einem der vorangehenden Ansprüche, **dadurch gekennzeichnet,** daß die Klebstoffäden bzw. -streifen (7a bis 7d; 7a', 7b'; 17a, 17b; 25) im noch nicht ausgehärteten Zustand mit den Faltenkanten in Kontakt gebracht und im Kontakt mit diesen ausgehärtet werden.

6. Verfahren nach einem der vorangehenden Ansprüche, **dadurch gekennzeichnet,** daß als Trägermaterial (4; 14; 27) ein vliesartiges Material oder ein monofilares Gewebe verwendet wird.

7. Verfahren nach Anspruch 6, **dadurch gekennzeichnet,** daß das vliesartige Material oder das monofilare Gewebe Durchlässe bzw. eine Maschenweite im Größenbereich von 30 bis 100 µm aufweist.

8. Verfahren nach Anspruch 6 oder 7, **dadurch gekennzeichnet,** daß das vliesartige Material oder das monofilare Gewebe Fasern aus Glas, Keramik, zellulose, Kunststoff oder mineralischen Stoffen aufweist.

9. Verfahren nach einem der Ansprüche 2 bis 8, **dadurch gekennzeichnet,** daß das Trägermaterial (4; 4'; 27) als Griffschutz auf dem ersten Filterbereich (3; 23) belassen wird.

10. Verfahren nach Anspruch 9, **dadurch gekennzeichnet,** daß als Träger (4; 14; 27) ein netz- oder gitterartiges Material, insbesondere aus Metall oder Kunststoff, verwendet wird.

11. Verfahren nach Anspruch 1, **dadurch gekennzeichnet,** daß das Trägermaterial (4'; 14) während oder nach der Aushärtung des Klebstoffs (17a, 17b) vor Gebrauch des Fluidfilters (18) vom Faltenkantenabschnitt wieder abgezogen wird derart, daß der Klebstoff (7a', 7b'; 17a, 17b) auf dem Faltenkantenabschnitt verbleibt.

12. Verfahren nach Anspruch 11, **dadurch gekennzeichnet,** daß als Trägermaterial (4; 14; 27) eine Folie aus einem Kunststoff verwendet wird, der vom Klebstoff benetzt wird, von diesem im an- oder ausgehärteten Zustand jedoch zerstörungsfrei abziehbar ist.

13. Verfahren nach einem der vorangehenden Ansprüche, **dadurch gekennzeichnet,** daß der Klebstoff auf das Trägermaterial (4; 14; 27) in einer Anordnung zueinander im wesentlichen konstanten Abstand aufweisender Streifen (7a bis 7d; 7a', 7b'; 17a, 17b; 25) aufgetragen wird.

14. Verfahren nach einem der vorangehenden Ansprüche, **dadurch gekennzeichnet,** daß das Trägermaterial (14) vor dem Auftragen der Klebstoffäden bzw. -streifen (17a, 17b) mit deren vorgesehener Lage entsprechenden Vertiefungen (16a, 16b) versehen wird.

15. Verfahren nach einem der vorangehenden Ansprüche, **dadurch gekennzeichnet,** daß die Faltenkanten des mit dem Klebstoff zu versehenden Faltenkantenabschnittes vor dem Aufbringen des Trägermaterials mit der vorgesehenen Lage der Klebstoffäden entsprechenden Vertiefungen versehen werden.

16. Verfahren nach einem der vorangehenden Ansprüche, **dadurch gekennzeichnet,** daß beide Faltenkantenbereiche des ersten Filterbereiches mit je einer Lage eines Trägermaterials in Kontakt gebracht werden.

17. Vorrichtung zur Durchführung des Verfahrens nach einem der Ansprüche 1 bis 16, mit
- Mitteln zum Zuführen des Materials (1; 11) für den ersten Filterbereich (3; 13) in eine Verarbeitungszone,
- Mitteln zum Festlegen der Lage von Faltenkanten (2; 12a) im Material (1; 11) für den ersten Filterbereich, - Mitteln zum Falten des Materials für den ersten Filterbereich,
- Mitteln (5a) zum Zuführen der Lage des Trägermaterials (4; 14) in die Verarbeitungszone,
- Mitteln (6a; 6b; 15b) zum lokalisierten Auftragen von Klebstoffäden (7a, 7b; 17a, 17b) bzw. -streifen auf eine Oberfläche des Trägermaterials (4; 14)
- Mitteln (5b; 15c) zum In-Kontakt-Bringen der mit Klebstoff (7a, 7b; 17a, 17b) versehenen Oberfläche des Trägermaterials mit einem Faltenkantenabschnitt (2b') des ersten Filterbereiches (3; 13) und
- Mitteln (5b) zum Abführen des Verbundes (8; 18) aus erstem Filterbereich und Trägermaterial aus der Verarbeitungszone.

18. Vorrichtung nach Anspruch 17, **gekennzeichnet durch** Mittel zum Prägen von Vertiefungen und/oder Erhebungen in das Material für den ersten Filterbereich.

19. Vorrichtung nach Anspruch 17 oder 18, **gekennzeichnet durch** Mittel (15a) zum Prägen von Vertiefungen (16a; 16b) zur Aufnahme der Klebstoffäden bzw. -streifen (17a, 17b) in das Trägermaterial (14).

20. Vorrichtung nach einem der Ansprüche 16 bis 19, **gekennzeichnet durch** Mittel (15d) zum Abziehen des Trägermaterials (14) von dem ersten Filterbereich (18) während des oder nach dem Aushärten des Klebstoffs (17a, 17b).

## Claims

1. Method for producing a fluid filter (8; 8'; 18; L) comprising a first filter area (3; 13; 23) constituted of a number of pleat walls arranged in an essentially zigzaggy continuous folding of a material (1; 11) which is permeable for the fluid, said pleat walls being connected to one another in at least one pleat edge portion (2b'; 24) by a localized application of adhesive,
**characterized in that**
said application of adhesive on said pleat edge portion (2b'; 24) is realized in that a layer of a substantially level carrier material (4; 4'; 14; 27) is provided on a surface by a thread-shaped or strip-shaped (7a through 7d; 7a', 7b'; 17a, 17b; 25) application of adhesive, and that said adhesive threads or strips in the pleat edges of cutting orientation are subsequently brought into contact with said pleat edge portion (2'b; 24) of said pre-folded first filter area (3; 13; 23), and are connected with said pleat edges.

2. Method according to claim 1,
**characterized in that** the carrier material (4; 27) is permeable for the fluid (20) to be filtered and is retained on said pleat edge portion (2b', 24) subsequent to hardening of the adhesive.

3. Method according to claim 2,
**characterized in that** said carrier (4) retained on said pleat edge portion (2b') is retained as a second filter area on said first filter area (3), in particular as a pre-filter in the inflowing fluid.

4. Method according to claim 2,
**characterized in that** said carrier retained on said pleat edge portion (24) is retained in the outflowing fluid (28) on said first filter area (23) as a flow smoother (27).

5. Method according to any one of the preceding claims,
**characterized in that** said adhesive threads respectively strips (7a through 7d; 7a', 7b'; 17a, 17b; 25) are brought into contact with said pleat edges in a not yet hardened state, and are hardened in contact with same.

6. Method according to any one of the preceding claims,
**characterized in that** a fleece-type material or a monofilament tissue is used as said carrier material (4; 14; 27).

7. Method according to claim 6,
**characterized in that** said fleece-type material or said monofilament tissue comprises openings, respectively a mesh width of 30 to 100 µm.

8. Method according to claim 6 or 7,
**characterized in that** said fleece-type material or said monofilament tissue comprises fibers of glass, ceramic, cellulose, synthetic or mineral material.

9. Method according to any one of claim 2 through 8,
**characterized in that** said carrier material (4; 4'; 27) is retained on said first filter area (3; 23) as a handle guard.

10. Method according to claim 9,
**characterized in that** a net-type or grid-type material, in particular of metal or synthetic material, is used as said carrier (4; 14; 27).

11. Method according to claim 1,
**characterized in that** said carrier material (4'; 14) is again stripped off from said pleat edge portion during or subsequent to hardening of said adhesive (17a, 17b) prior to the use of said fluid filter (18) such that said adhesive (7a', 7b'; 17a, 17b) remains on said pleat edge portion.

12. Method according to claim 11,
**characterized in that** a film of synthetic material is used as said carrier material (4; 14; 27), said foil being moistened by said adhesive, but which may be non-destructively stripped off from same in the partially or completely hardened state.

13. Method according to any one of the preceding claims,
**characterized in that** said adhesive is applied onto said carrier material (4; 14; 27) in an arrangement relative to one another comprising strips (7a through 7d; 7a', 7b'; 17a, 17b; 25) at a substantially constant spacing.

14. Method according to any one of the preceding claims,
**characterized in that** prior to the application of the adhesive threads or strips (17a, 17b), said carrier material (14) is provided with recesses (16a, 16b) corresponding to the provided layer of said threads, respectively strips.

15. Method according to any one of the preceding claims,
**characterized in that** prior to the application of said carrier material, said pleat edges of the pleat edge portion to be provided with said adhesive are provided with recesses corresponding to the provided layer of said adhesive threads.

16. Method according to any one of the preceding claims,
**characterized in that** both of the pleat edge portions of the first filter area are each brought into contact with one layer of the carrier material.

17. Device for the realization of the method according to any one of claims 1 through 16, comprising
- means for feeding said material (1; 11) for said first filter area (3; 13) into a processing zone,
- means for fixing the layer of pleat edges (2; 12a) in said material (1; 11) for said first filter area,
- means for folding said material for said first filter area,
- means (5a) for feeding the layer of said carrier material (4; 14) into said processing zone,
- means (6a; 6b; 15b) for enabling a localized application of adhesive threads (7a, 7b; 17a, 17b), respectively adhesive strips onto a surface of said carrier material (4; 14),
- means (5b; 15c) for bringing said surface provided with adhesive (7a, 7b; 17a, 17b) of said carrier material into contact with one pleat edge portion (2b') of said first filter area (3; 13), and
- means (5b) for discharging the composite (8; 18) of first filter area and carrier material from said processing zone.

18. Device according to claim 17,
**characterized by** means for imprinting recesses and/or elevations into said material for said first filter area.

19. Device according to claim 17 or 18,
**characterized by** means (15a) for imprinting recesses (16a; 16b) into said carrier material (14) for receiving said adhesive threads, respectively strips (17a, 17b).

20. Device according to any one of claims 16 through 19,
**characterized by** means (15d) for stripping off said carrier material (14) from said first filter area (18) during or subsequent to hardening of said adhesive (17a, 17b).

## Revendications

1. Procédé pour produire un filtre de fluide (8; 8'; 18; L) ayant une première zone de filtre (3; 13; 23) constituée d'un nombre de parois de plis arrangées en pliage continu essentiellement en zigzag d'un matériau (1; 11) perméable au fluide, lesdites parois étant liées les unes aux autres au moyen d'une application d'adhésif dans au moins une partie de bords des plis (2b'; 24),
**caractérisé en ce que**
ladite application d'adhésif sur ladite partie de bords des plis (2b'; 24) est réalisée en ce qu'une couche d'un matériau support (4; 4'; 14; 27) essentiellement plane est pourvue d'une application d'adhésif en forme de bandes et respectivement de fils (7a à 7d; 7a'; 7b'; 17a, 17b; 25) sur une surface, et lesdites bandes, respectivement lesdits fils d'adhésif sont ensuite mis en contact dans les bords des plis d'orientation coupante avec la partie de bords des plis (2b'; 24) de la première zone de filtre (3; 13; 23), et sont liées avec lesdits bords des plis.

2. Procédé selon la revendication 1,
**caractérisé en ce que** le matériau support (4; 27) est perméable au fluide (20) à filtrer et qu'il est retenu sur la partie de bords des plis (2b', 24) après le durcissement de l'adhésif.

3. Procédé selon la revendication 2,
**caractérisé en ce que** le support (4) retenu sur la partie de bords des plis (2b'), est retenu sur la première zone de filtre (3) en tant que seconde zone de filtre, en particulier en tant que filtre préliminaire dans le fluide affluant.

4. Procédé selon la revendication 3,
**caractérisé en ce que** le support retenu sur la partie de bords des plis (24), est retenu sur la première zone de filtre (23) en tant que moyen calmant l'écoulement (27) dans le fluide (28) qui s'écoule.

5. Procédé selon une des revendications précédentes,
**caractérisé en ce que** les bandes, respectivement les fils d'adhésif (7aa à 7d; 7a', 7b'; 17a, 17b; 25) sont mis en contact avec les bords des plis en état non encore durci, et qu'ils durcissent en contact mutuel.

6. Procédé selon une des revendications précédentes,
**caractérisé en ce qu'**un matériau du type de nappe de fibres ou un tissu monofilaire est employé en tant que matériau support (4; 14; 27).

7. Procédé selon la revendication 6,
**caractérisé en ce que** ledit matériau du type de nappe de fibres ou ledit tissu monofilaire comprend des passages, respectivement des mailles d'une largeur de 30 à 100 µm.

8. Procédé selon la revendication 6 ou 7,
**caractérisé en ce que** ledit matériau du type de nappe de fibres ou ledit tissu monofilaire comprend des fibres en verre, en céramique, en cellulose, en matière synthétique ou en matières minérales.

9. Procédé selon une des revendications 2 à 8,
**caractérisé en ce que** le matériau support (4; 4'; 27) est retenu sur la première zone de filtre (3; 23) en tant que protection de maniement.

10. Procédé selon la revendication 9,
**caractérisé en ce qu**'un matériau du type de treillis ou de grille, en particulier en métal ou en matière synthétique, est employé en tant que support (4; 14; 27),.

11. Procédé selon la revendication 1,
**caractérisé en ce que** le matériau support (4'; 14) est retiré de la partie de bords de plis pendant ou après le durcissement de l'adhésif (17a, 17b) avant l'usage du filtre de fluide (18) de manière à ce que l'adhésif (7a', 7b'; 17a, 17b) soit retenu sur la partie de bords des plis.

12. Procédé selon la revendication 11,
**caractérisé en ce qu'**une feuille en matière synthétique est employée en tant que matériau support (4; 14; 27), ladite feuille étant humidifiée par l'adhésif, mais pouvant en être détachée en état partiellement ou entièrement durci de manière non-destructive.

13. Procédé selon une des revendications précédentes,
**caractérisé en ce que** l'adhésif est appliqué sur le matériau support (4; 14; 27) dans un arrangement respectif comprenant des bandes (7a à 7d; 7a', 7b'; 17a, 17b; 25) d'un espacement essentiellement constant.

14. Procédé selon une des revendications précédentes,
**caractérisé en ce que** le matériau support (14), avant l'application des bandes d'adhésif, respectivement des fils d'adhésif (17a, 17b), est pourvu d'excavations (16a, 16b) correspondantes à la position prévue desdites bandes ou desdits fils.

15. Procédé selon une des revendications précédentes,
**caractérisé en ce que** les bords des plis de la partie de bords des plis à pourvoir avec ledit adhésif, sont pourvus avec d'excavations correspondantes à la position prévue des fils d'adhésif avant l'application du matériau support.

16. Procédé selon une des revendications précédentes,
**caractérisé en ce que** les deux parties de bords des plis de la première zone de filtre sont chacune mises en contact avec une couche d'un matériau support.

17. Dispositif pour réaliser le procédé selon une des revendications 1 à 16, comportant
- des moyens pour conduire le matériau (1; 11) pour la première zone de filtre (3; 13) dans une première zone de traitement,
- des moyens pour fixer la couche des bords des plis (2; 12a) dans le matériau (1; 11) pour la première zone de filtre,
- des moyens pour plier le matériau pour la première zone de filtre,
- des moyens (5a) pour conduire la couche du matériau support (4; 14) dans la zone de traitement,
- des moyens (6a; 6b; 15b) pour une application localisée de fils d'adhésif (7a, 7b; 17a, 17b), respectivement de bandes d'adhésif, sur une surface du matériau support (4; 14);
- des moyens (5b; 15c) pour la mise en contact de la surface du matériau support pourvue d'adhésif (7a, 7b; 17a, 17b) avec une partie de bords des plis (2b') de la première zone de filtre (3; 13), et
- des moyens (5b) pour évacuer le composite (8; 18) de la première zone de filtre et le matériau support de la zone de traitement.

18. Dispositif selon la revendication 17,
**caractérisé en** moyens pour imprimer des excavations et/ou des élévations dans le matériau pour la première zone de filtre.

19. Dispositif selon la revendication 17 ou 18,
**caractérisé en** moyens (15a) pour imprimer des excavations (16a; 16b) dans le matériau support (14) pour la réception des fils d'adhésif, respectivement des bandes d'adhésif (17a, 17b).

20. Dispositif selon une des revendications 16 à 19,
**caractérisé en** moyens (15d) pour retirer le matériau support (14) de la première zone de filtre (18) pendant ou après le durcissement de l'adhésif (17a, 17b).
